# DEMANDE DE BREVET EUROPEEN

(11) **EP 0 551 218 A1**
(43) Date de publication de la demande: **14.07.1993**
(21) Numéro de dépôt: 93400001.9
(22) Date de dépôt: 04.01.1993
(51) Int. Cl.: H01B 3/44

(54) **Isolant pour câbles électriques**

(30) Priorité: 06.01.1992 FR 9200035
(71) Demandeur: ELF ATOCHEM S.A., F-92800 Puteaux (FR)
(72) Inventeur: Chabagno, Jean-Michel, F-64000 Pau (FR); Junca, Gérard, F-64160 Morlaas (FR); Montage, Philippe, F-64160 Morlaas (FR); Pourtau, Jean, F-64000 Pau (FR)
(74) Mandataire: Ahner, Francis

(57) **Abrégé**

La présente invention concerne une composition isolante pour câble électrique comprenant un mélange d'un copolymère éthylène-acrylate d'alkyle ou éthylène-acétate de vinyle et d'un composé polymérique, ledit composé polymérique étant un terpolymère d'éthylène-acrylate d'alkyle-anhydride maléique ou un terpolymère éthylène-acétate de vinyle-anhydride maléique, et des additifs usuels comme par exemple un agent de réticulation, son emploi pour la préparation d'une gaine d'isolation des câbles électriques et la gaine d'isolation obtenue.

## Description

la présente invention concerne un isolant pour câble électrique et en particulier pour câble électrique moyenne tension. Cet isolant est constitué d'un mélange de copolymère éthylène-dérivé de l'acide acrylique et d'un terpolymère éthylène-dérivé de l'acide acrylique-anhydride maléique, réticulé par voie peroxyde.

Un des principaux défauts apparaissant dans les câbles électriques moyenne tension est la formation d'arborescences d'eau. l'arborescence d'eau est un phénomène parasite apparaissant dans les câbles isolés avec du polyéthylène réticulé. Généralement ce phénomène peut se présenter sous deux aspects, à savoir l'aspect papillon (bow tie tree) ou bien l'aspect demi-papillon encore appelé effiloché, ou ouvert (vented tree). La génération d'une arborescence d'eau nécessite la présence conjointe d'un champ électrique alternatif et d'eau. Elle prend naissance à partir d'un défaut de l'isolant et se propage dans l'isolant jusqu'à aboutir à son claquage. la durée de vie d'une arborescence d'eau est très variable. Elle se situe entre quelques mois et quelques années. On peut distinguer trois phases dans la vie d'une arborescence : une période d'incubation, une période de croissance, et la période de passage à l'arborescence électrique qui provoque le claquage. la structure d'une arborescence d'eau apparaît, au microscope, comme un ensemble de microcanaux plus ou moins reliés entre eux.

Pour tenter de remédier à ces' inconvénients, il a d'abord été préconisé d'associer aux polyéthylènes réticulés, des matériaux hydrophiles destinés à retarder l'apparition et la croissance des arborescences. Ensuite, à ces polyéthylènes ont été associés des composés du type silane ou des copolymères éthylène-acrylate d'alkyle, tels qu'acrylates d'éthyle ou de butyle. Ainsi, le brevet japonais JP-A-02 311121 décrit, comme isolant électrique pour câble, un mélange de polyéthylène avec un copolymère éthylène-acrylate ou un copolymère éthylène-acide acrylique, ou un copolymère éthylène-acétate de vinyle greffé acide maléique ou un copolymère éthylène-acrylate greffé acide maléique.

Il s'est cependant avéré dans la pratique que les solutions antérieurement préconisées ne donnaient pas totale satisfaction, car les claquages de câbles électriques, par suite de formation d'arborescence d'eau, continuaient de se produire beaucoup trop rapidement.

La présente invention a précisément eu pour but d'améliorer les compositions isolantes pour câbles électriques de manière à retarder de façon beaucoup plus significative l'apparition et le développement des phénomènes d'arborescence d'eau.

Selon la présente invention, l'isolant revendiqué est une composition qui comprend un mélange d'un copolymère éthylène-acrylate d'alkyle ou éthylène-acétate de vinyle et d'un terpolymère éthylène-acrylate d'alkyle-anhydride maléique ou d'un terpolymère éthylène-acétate de vinyle-anhydride maléique.

Dans le mélange selon l'invention, le copolymère peut représenter de 50 à 99 % en poids, pour 50 à 1 % de terpolymère, et de préférence de 80 à 99 parties en poids de copolymère et de 1 à 20 parties en poids de terpolymère.

Dans la pratique, il s'est en outre avéré que pour améliorer les propriétés du mélange selon l'invention il était recommandé que l'indice de fluidité (Melt Index : MI) du terpolymère soit supérieur ou égal à celui du copolymère.

Dans le cas du copolymère ou du terpolymère, l'acrylate d'alkyle est de préférence choisi parmi l'acrylate de méthyle, l'acrylate d'éthyle ou l'acrylate de butyle.

Les copolymères éthylène-acrylate d'alkyle et éthylène-acétate de vinyle et les terpolymères tels que cités précédemment sont des produits commerciaux connus en eux-mêmes.

Les copolymères utilisables dans le mélange sont de préférence à faible teneur en acrylate d'alkyle ou en acétate de vinyle. Avantageusement, cette teneur en poids est comprise entre 0,5 et 10 %, de préférence entre 2 et 5 %, par rapport au poids total dudit copolymère.

Les terpolymères utilisables dans le mélange possèdent des teneurs en poids en acrylate d'alkyle ou en acétate de vinyle généralement compris entre 5 et 40 %, de préférence entre 10 et 20 %, par rapport au poids total dudit terpolymère, et des teneurs en poids d'anhydride maléique sont avantageusement comprises entre 0,1 et 10 %, de préférence entre 0,1 et 5 %, par rapport au poids total de terpolymère.

Des additifs usuels, tels que des antioxydants et/ou des initiateurs de radicaux libres employés comme agents de réticulation peuvent également être ajoutés aux compositions selon la présente invention.

Les terpolymères utilisables dans le cadre de la présente invention peuvent par exemple être fabriqués par la mise en oeuvre d'un procédé tel que décrit dans le brevet FR-A-2 498 609. Ce brevet décrit en effet un procédé de fabrication de terpolymères radicalaires de l'éthylène comprenant des motifs dérivés d'un (méth)acrylate et des motifs dérivés de l'anhydride maléique, par copolymérisation à haute pression en présence d'au moins un initiateur de radicaux libres d'un mélange d'éthylène, d'ester d'acide (méth)acrylique et d'anhydride maléique.

De tels procédés de fabrication de terpolymères radicalaires d'éthylène peuvent également être illustrés par les documents EP-A-0 174 244 et EP-A-0 177 378.

Le mélange du copolymère avec le terpolymère peut s'effectuer par tout moyen classique bien connu de l'homme du métier, par exemple dans une extrudeuse.

Les essais de vieillissement et les mesures de propagation des arborescences, qui ont permis de mettre en évidence les propriétés avantageuses et tout à fait inattendues des compositions selon l'invention, ont été effectués dans les conditions suivantes.

Le protocole expérimental de ces essais sera décrit ci-après plus en détail en référence aux dessins annexés, sur lesquels :
- la figure 1 représente schématiquement l'installation sur laquelle l'étude d'arborescence a été effectuée,
- la figure 2 représente un échantillon comportant un défaut de moulage favorisant le développement d'une arborescence, et
- la figure 3 représente, à plus grande échelle, la pointe de l'échantillon de la figure 2, au niveau de laquelle l'arborescence se développe.
- les figures 4 à 7 représentent les résultats obtenus pour plusieurs exemples de compositions selon l'invention en comparaison des compositions de l'art antérieur.

L'étude des arborescences d'eau repose sur le principe consistant, sous l'effet de l'application d'une haute tension à fréquence élevée, à favoriser le développement d'une arborescence (12) sur des échantillons (10) dans lesquels a été créé artificiellement par moulage un défaut.

Le porte échantillon (14) fixé sur une table mobile (16), se déplace devant l'objectif d'un microscope (18) relié à une caméra vidéo miniature (20), afin de visualiser l'arborescence. Il est en outre prévu un dispositif d'éclairage (22) destiné à favoriser la visualisation du phénomène d'arborescence. La caméra (20) est en liaison avec un micro-ordinateur (24) par l'intermédiaire d'une carte de traitement d'image pilotée par un logiciel permettant la saisie des dimensions de l'arborescence (12).

Les échantillons (10) remplis d'un liquide conducteur (H₂O + NaCl) sont soumis à une haute tension alternative de 7000 V à 1500 Hertz, par l'intermédiaire d'électrodes de platine (26) plongeant dans la solution, celles-ci étant elles-mêmes alimentées par une barre conductrice (28) reliée au transformateur (30).

Le déplacement des échantillons (10), programmé dans le temps, permet de définir la vitesse à laquellle se développe l'arborescence.

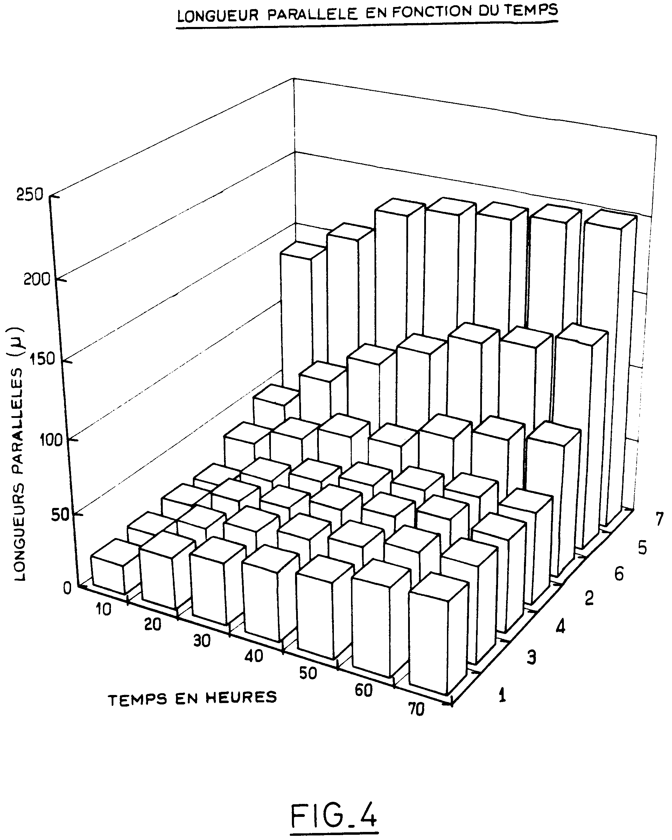

Comme illustré sur les figures annexées, les échantillons (10) sont animés de mouvements de translations tant parallèlement que perpendiculairement au champ électrique **E** auquel sont soumis les échantillons (10), et plus particulièrement les pointes (32) des échantillons (10). La conduite de cette expérimentation a pu être menée dans de parfaites conditions de fiabilité, notamment grâce à la mise au point d'un premier logiciel de pilotage du déplacement des échantillons et de leur mise au point optique. Un second logiciel a permis de réaliser automatiquement le traitement des images d'arborescence observées, le stockage des valeurs saisies, ainsi que le calcul des vitesses de développement de l'arborescence. le logiciel a en outre permis la création automatique des graphiques correspondant aux longueurs et célérités des arborescences observées, tant dans la direction parallèle que dans la direction perpendiculaire au champ électrique, en fonction du temps. Ces graphes font l'objet des figures 4 à 7 annexées.

Les exemples suivants illustrent l'invention sans toutefois chercher à en limiter la portée.

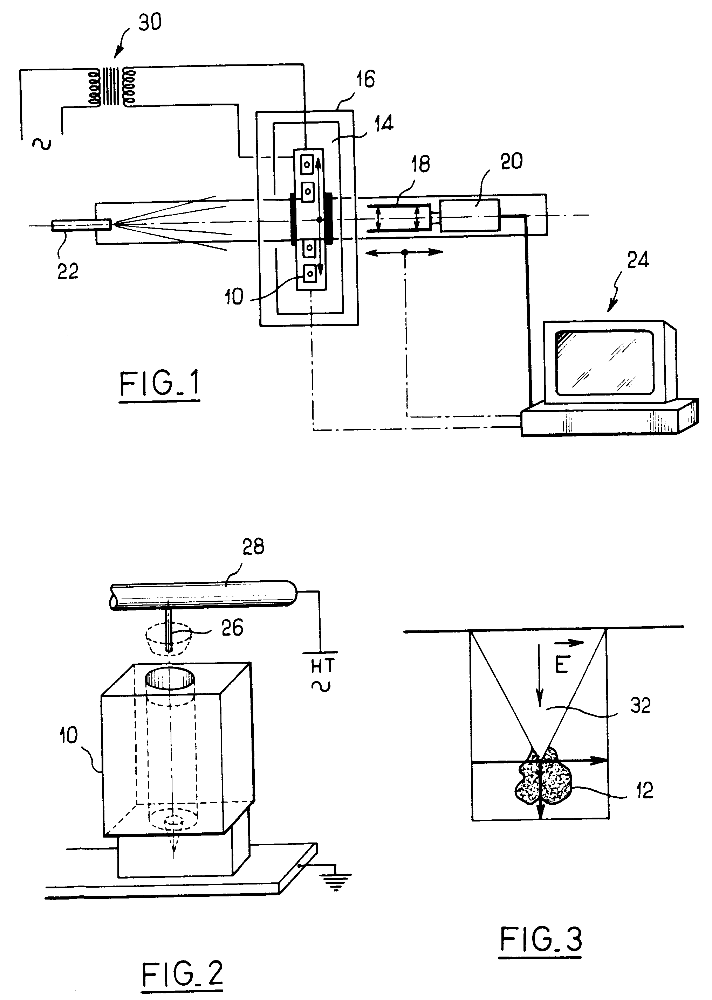

Tous les échantillons ont été préparés comme suit :
- Dans une extrudeuse classique sont incorporés tous les ingrédients rentrant dans la formulation des mélanges retardateurs d'arborescence et sont extrudés à 100°C.
- A partir des granulés obtenus, une imprégnation avec 2 % de peroxyde de dicumyle est effectuée à 90°C pendant quatre heures dans un Rotovapor.
- Les granulés imprégnés de peroxyde sont ensuite moulés sous presse (25 bars, 180°C pendant 10 minutes) dans un moule réalisé à cet effet pour obtenir des éprouvettes telles que celle illustrée à la figure 2.
- On s'assure que cette éprouvette comporte en partie basse une pointe (32) autour de laquelle se développera l'arborescence (12).
- Un dégazage sous vide est ensuite réalisé dans une étuve (70°C) pendant une semaine afin d'extraire tout élément volatil polaire, produit de décomposition du peroxyde de dicumyle.

Les échantillons sont ensuite placés sur le banc d'essai où l'on mesure la croissance de l'arborescence qui se développe parallèlement et perpendiculairement au champ électrique, comme illustré par la figure 3.

Le tableau I suivant décrit les compositions 1 à 4 selon l'invention obtenues dans les conditions précédemment définies.

Le tableau II décrit les compositions 5 à 7, illustrant l'art antérieur, en particulier JP-A-02 311121 pour la composition 7.

Les pourcentages indiqués sont pondéraux par rapport à la composition totale.

| **Tableau I** **- COMPOSITIONS SELON L'INVENTION** | | | | |
|---|---|---|---|---|
| **Numéros** | **1** | **2** | **3** | **4** |
| E.MA (98.2) | 87,8% | 87,8% | | |
| E.VA (98.2) | | | 87,8% | 87,8% |
| E.BA.AM (88.9.3) | 10,0% | | 10,0% | |
| E.VA.AM (80.19,5.0,5) | | 10,0% | | 10,0% |
| IRGANOX* 1081 | 0,2% | 0,2% | 0,2% | 0,2% |
| DICUP** | 2,0% | 2,0% | 2,0% | 2,0% |

Les abréviations sont définies comme suit :
- - E.MA: : copolymère éthylène - acrylate de méthyle ; MI = 2;
- - E.VA: : copolymère éthylène - acétate de vinyle ; MI = 2;
- - E.BA.AM: : terpolymère éthylène - acrylate de butyle - anhydride maléique ; MF = 40;
- - E.VA.AM: : terpolymère éthylène - acrylate de butyle - anhydride maléique , MI = 7;
- - IRGANOX* 1081: : 2,2'-thiobis -(4-terbutyl-3-méthylphénol) [antioxydant]
- - DICUP**: : peroxyde de dicumyle

| **Tableau II** **- COMPOSITION NON CONFORMES A LA PRESENTE INVENTION, A** **TITRE DE COMPARAISON** | | | |
|---|---|---|---|
| **Numéros** | **5** | **6** | **7** |
| PE | 97,8% | | 87,8% |
| E.MA(98.2) | | 97,8% | |
| E.EA(82.18) | | | 10,0% |
| IRGANOX*1081 | 0,2% | 0,2% | |
| DICUP** | 2,0% | 2,0% | 2,0% |
| SANTONOX*** | | 0,2% | |

- - PE: : polyéthylène; MI = 2 ;
- - E.EA: : copolymère éthylène - acétate d'éthyle ;
- - SANTONOX***: : 4,4'-thiobis-(6-terbutyl-3-méthylphénol) [antioxydant]

Les essais de vieillissement et les mesures de propagation des arborescences ont été effectués pour les compositions 1 à 7 dans les conditions données précèdemment.

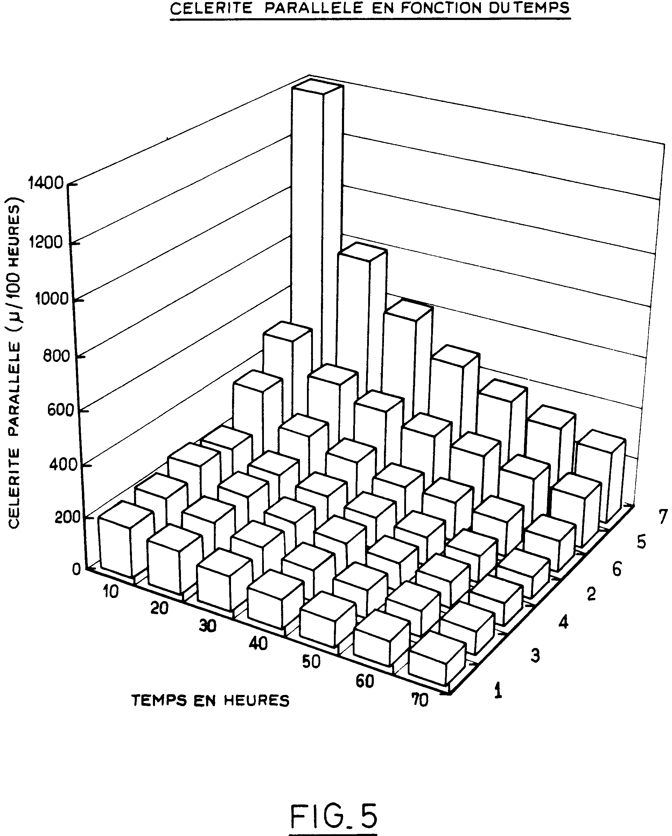

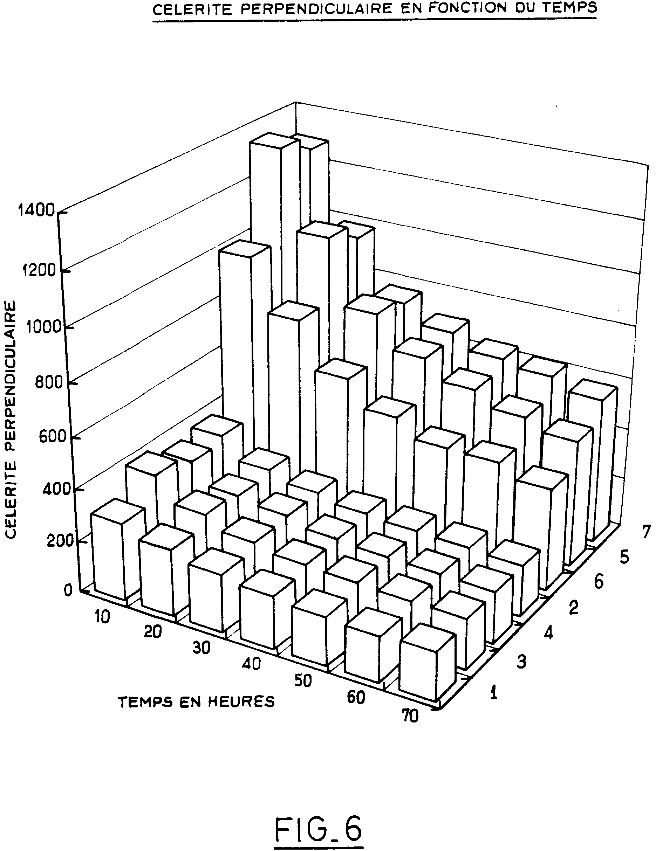

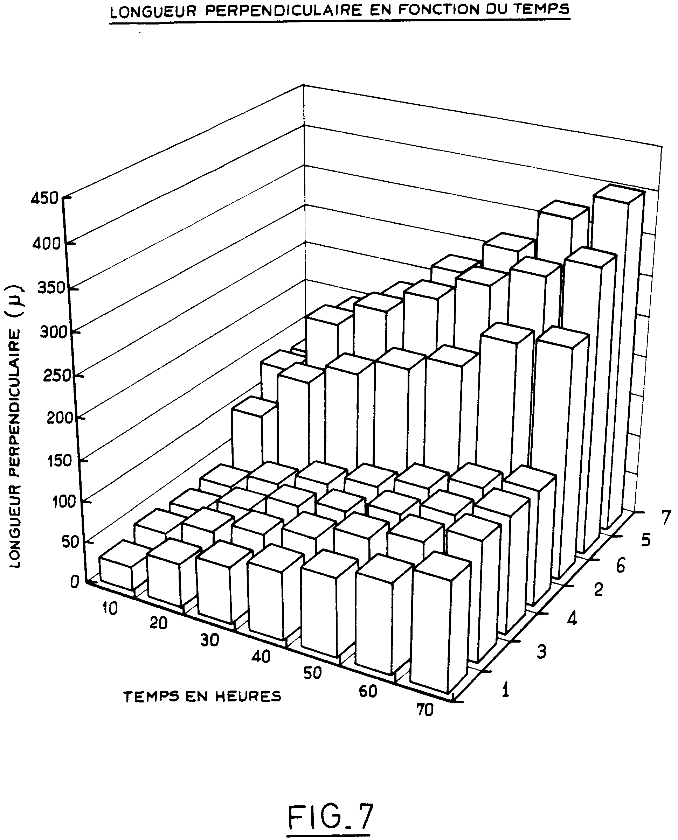

Les résultats obtenus sont rapportés sur des diagrammes, représentés par les figures 4 et 5 pour la longueur et la célérité parallèles des arborescences en fonction du temps, et les figures 6 et 7 pour les mêmes paramètres correspondants au développement des arborescences perpendiculairement au champ électrique.

L'analyse de ces diagrammes permet de distinguer le groupe homogène des compositions selon l'invention des compositions illustrant l'art antérieur.

Les longueurs des arborescences obtenues avec les compositions de la présente invention sont de 1,6 à 7 fois inférieures à celles obtenues sur les compositions illustrant l'art antérieur.

De même, la célérité de propagation des arborescences est nettement diminuée pour les compositions de la présente invention.

Ces améliorations, constatées pour la croissance des arborescences parallèle au champ électrique, sont particulièrement innatendues pour leur croissance perpendiculaire à ce même champ. Les diagrames représentés par les figures 6 et 7, annexées, marquent clairement la distinction entre les compositions selon la présente invention et celles iullustrant l'art antérieur.
De telles propriétés rendent avantageuse l'utilisation des compositions selon la présente invention pour la préparation de graines d'isolation de câbles électriques.

Ces gaines peuvent être obtenues par des techniques usuelles connues de l'homme de l'art, telles que le moulage et/ou l'extrusion.

## Revendications

1. Composition isolante pour câble électrique comprenant un mélange d'un copolymère éthylène-acrylate d'alkyle ou éthylène-acétate de vinyle et d'un composé polymérique, caractérisé en ce que le composé polymérique est un terpolymère d'éthylène-acrylate d'alkyle-anhydride maléique ou un terpolymère éthylène-acétate de vinyle-anhydride maléique.

2. Composition selon la revendication 1, caractérisée en ce qu'elle contient de 50 à 99 parties en poids de copolymère et 1 à 50 parties en poids de terpolymère.

3. Composition selon l'une des revendications 1 et 2, caractérisée en ce qu'elle contient de 80 à 99 parties en poids de copolymère et de 1 à 20 parties en poids de terpolymère.

4. Composition selon l'une des revendications 1 à 3, caractérisée en ce que l'indice de fluidité du terpolymère est supérieur ou égal à celui du copolymère.

5. Composition selon l'une des revendications 1 à 4, caractérisée en ce que l'acrylate d'alkyle est choisi parmi l'acrylate de méthyle, l'acrylate d'éthyle et l'acrylate de butyle.

6. Composition selon l'une des revendications 1 à 5, caractérisée en ce que ledit copolymère présente une faible teneur en acrylate d'alkyle ou en acétate de vinyle, comprise entre 0,5 et 10 % en poids, de préférence entre 2 et 5 % en poids, par rapport au poids total dudit copolymère.

7. Composition selon l'une des revendications 1 à 6, caractérisée en ce que ledit terpolymère présente une teneur en acrylate d'alkyle ou en acétate de vinyle comprise entre 5 et 40 % en poids, de préférence entre 10 et 20 % en poids, par rapport au poids total dudit terpolymère.

8. Composition selon l'une des revendications 1 à 7, caractérisée en ce que ledit terpolymère présente la teneur en anhydride maléique comprise entre 0,1 et 5 % en poids, par rapport au poids total du terpolymère.

9. Composition selon l'une des revendications 1 à 8, caractérisée en ce qu'elle comprend des additifs usuels, particulièrement des antioxydants et/ou des initiateurs de radicaux libres.

10. Utilisation d'une composition selon l'une des revendications 1 à 9 pour la préparation d'une gaine d'isolation de câbles électriques.

11. Gaine d'isolation de câbles électriques, caractérisée en ce qu'elle est constituée d'une composition isolante selon l'une des revendications 1 à 9.
